# EUROPÄISCHE PATENTSCHRIFT

(11) **EP 2 995 870 B1**
(45) Veröffentlichungstag und Bekanntmachung des Hinweises auf die Patenterteilung: **06.05.2020**
(21) Anmeldenummer: 14184596.6
(22) Anmeldetag: 12.09.2014
(51) Int. Cl.: B32B 5/02, B32B 5/18, B32B 7/12, B32B 15/04, B32B 15/12, B32B 15/20, B32B 27/08, B32B 27/10, B32B 27/12, B32B 27/32, B32B 1/08, F16L 3/26, F24D 3/12, F24D 3/14, B32B 27/06

(54) **Flächentemperierungssystem sowie Verfahren zu seiner Herstellung**
Surface tempering system and its manufacturing method
Système de régulation de température de surface et méthode de fabrication d'un tel système

(43) Veröffentlichungstag der Anmeldung: 16.03.2016
(73) Patentinhaber: REHAU AG + Co, 95111 Rehau (DE)
(72) Erfinder: Burkhardt, Oliver, 91080 Uttenreuth (DE); Vohler, Tobias, 92318 Neumarkt (DE); Koch, Klaus Paul, 90513 Zirndorf (DE)

(56) Entgegenhaltungen:
- EP-A1- 0 346 529
- DE-A1- 3 125 839
- DE-U1-202010 009 133
- DE-U1-202010 009 431

## Beschreibung

Die vorliegende Erfindung betrifft ein Flächentemperierungssystem, das mindestens ein flexibles Kunststoffrohr, dessen Außenseite zumindest teilweise von einem ersten Element einer Klettverbindung ummantelt ist; eine Trägerfolie , wobei an einer Seite der Trägerfolie ein zweites Element der Klettverbindung angeordnet ist, so dass das flexible Kunststoffrohr lösbar unter Bildung der Klettverbindung an der Trägerfolie festlegbar sind; und einen formstabilen, flächigen Träger umfasst, auf dessen einer Seite die Trägerfolie angeordnet ist. Darüber hinaus betrifft die vorliegende Erfindung ein Verfahren zur Herstellung des erfindungsgemäßen Flächentemperierungselements.

Flächentemperierungssysteme und darin einsetzbare flexible Kunststoffrohre sind aus dem Stand der Technik bekannt. Derartige Flächentemperierungssysteme werden zum Heizen und Kühlen von Räumen eingesetzt, wobei in Fußböden, Wänden oder Decken verlegte, von einem Wärmeträgermedium durchströmte Rohrleitungen in einer Estrichschicht in Fußböden, Wänden oder Decken eingegossen sind. Vor dem Vergießen mit Estrich sind die Rohrleitungen üblicherweise durch geeignete Schienen oder Halter auf Trägern gehaltert. Zur einfacheren und schnelleren Verlegung ist es bekannt, die Rohrleitungen mittels einer Klettverbindung auf den Trägern zu festzulegen. Beispielsweise beschreibt die DE 20 2010 009 133 U1 ein Flächentemperierungssystem mit einer Klett-Faserplatte aus einem formstabilen flächigen Träger mit einer Dicke zwischen 2,5 mm und 7 mm, auf den eine gewebeverstärkte Folie aufgebracht ist, die ein erstes Element einer Klettvorrichtung bildet, und einem flexiblen Rohr, das zumindest teilweise mit einem zweiten Element der Klettvorrichtung ummantelt ist. Der formstabile, flächige Träger wird vor dem Aufbringen des flexiblen Kunststoffrohrs und dem Vergießen mit Estrich auf einer zusätzlich erforderlichen Dämmstoffschicht verlegt. Nachteilig an dem in der DE 20 2010 009 133 U1 beschriebenen Flächentemperierungssystem wird gesehen, dass es der dünne formstabile flächige Träger die hohen Anforderungen an Flächentemperierungssysteme, wie sie in der EN 1264 normiert sind, nicht erfüllen können. Hierzu ist zusätzlich eine bauseitig verlegte Dämmstoffschicht erforderlich, was einen weiteren kostenintensiven Arbeitsschritt bei der Installation der Flächentemperierungssysteme erforderlich macht.

Aus der EP 0 346 529 A1 ist ein Flächentemperierungssystem bekannt, bei dem das Rohr mittels eines Haftverschluss bezeichneten Klettverschluss auf einer Unterlage 2 festgelegt ist. Die Unterlage kann dabei in Form einer Dämmplatte, beispielsweise aus einem Polyurethanschaumstoff, ausgebildet sein. Weiterhin kann die Unterlage an ihrer Rückseite eine Abdeckfolie 21 aufweisen. Dieses Dokument offenbart ein Flächentemperierungssystem mit den Merkmalen des Oberbegriffs des Anspruchs 1, und ein Verfahren mit den Merkmalen des Oberbegriffs des Anspruchs 8. Die DE 31 25 839 A1 beschreibt eine wärmeisolierende Platte für die Bildung einer wärmeisolierenden Schicht einer Fußbodenheizung, mit einem Plattenkörper aus aufgeschäumtem Kunststoff, insbesondere aus Polyurethan, sowie ein Verfahren zu deren Herstelllung bekannt.

An dieser Stelle setzt die vorliegende Erfindung ein, deren Aufgabe darin liegt, ein Flächentemperierungssystem sowie ein dieses Verfahren zu dessen Herstellung zur Verfügung zu stellen, die die Nachteile des Stands der Technik überwinden. Insbesondere soll das erfindungsgemäße ein Flächentemperierungssystem einen einfachen Aufbau aufweisen, leicht verlegbar sein und verbesserte Isolierungseigenschaften besitzen.

Diese und andere Aufgaben werden durch ein Flächentemperierungssystem mit den Merkmalen des Anspruchs 1 bzw. durch ein Verfahren mit den Merkmalen des Anspruchs 9 gelöst. Bevorzugte Ausführungsformen der Erfindung sind in den davon jeweils abhängigen Ansprüchen beschrieben.

Gemäß der vorliegenden Erfindung wurde erkannt, dass die Installation eines Flächentemperierungssystems dadurch signifikant vereinfacht werden kann, der formstabile flächige Träger gleichzeitig die Funktion der Dämmstoffschicht übernimmt. Hierzu ist der formstabile flächige Träger erfindungsgemäß als 1 cm bis 20 cm dicke Polymerschaumstoff-Dämmschicht ausgebildet. Um die isolierenden Eigenschaften des formstabilen flächigen Trägers weiter zu steigern, ist dessen der Trägerfolie abgewandte Seite zusätzlich mit einer Abdeckfolie versehen, wobei die Abdeckfolie als Verbundfolie ausgebildet ist, deren dem formstabilen, flächigen Träger zugewandte Seite als Metallschicht, vorzugsweise als Aluminiumschicht ausgebildet ist. Durch einen derartigen Aufbau lassen sich die isolierenden Eigenschaften des formstabilen, flächigen Trägers weiter erhöhen.

Dementsprechend liegt die vorliegende Erfindung in der Bereitstellung eines Flächentemperierungssystems, das mindestens ein flexibles Kunststoffrohr, dessen Außenseite zumindest teilweise von einem ersten Element einer Klettverbindung ummantelt ist; eine Trägerfolie, wobei an einer Seite der Trägerfolie ein zweites Element der Klettverbindung angeordnet ist, so dass das/die flexible(n) Kunststoffrohr(e) lösbar unter Bildung der Klettverbindung an der Trägerfolie festlegbar sind; und einen formstabilen, flächigen Träger umfasst, auf dessen einer Seite die Trägerfolie angeordnet ist; wobei der formstabile, flächige Träger als 1 cm bis 20 cm dicke Polymerschaumstoff-Dämmschicht, insbesondere als 3 cm bis 15 cm dicke und vorzugsweise als 5 cm bis 10 cm dicke Polymerschaumstoff-Dämmschicht, ausgebildet ist, dessen der Trägerfolie abgewandte Seite mit einer Abdeckfolie verbunden ist, wobei die Abdeckfolie als Verbundfolie ausgebildet ist, deren dem formstabilen, flächigen Trägern zugewandte Seite als Metallschicht, vorzugsweise als Aluminiumschicht, ausgebildet ist. Darüber hinaus betrifft die vorliegende Erfindung ein Verfahren zur Herstellung eines erfindungsgemäßen Flächentemperierungssystems, das die folgenden Stufen umfasst:
- Bereitstellen einer Abdeckfolie;
- Bereitstellen einer Trägerfolie, wobei an einer Seite der Trägerfolie ein zweites Element einer Klettverbindung angeordnet ist;
- Zuführen der Abdeckfolie und der Trägerfolie zu einer Aufschäumvorrichtung;
- Aufschäumen eines Polymermaterials in eine Dicke von 1 cm bis 20 cm zur Polymerschaumstoff-Dämmschicht zwischen der Trägerfolie und der Abdeckfolie in der Aufschäumvorrichtung, wodurch ein einseitig mit der Trägerfolie versehener, formstabiler, flächiger Träger gebildet wird; und
- Verlegen eines flexiblen Kunststoffrohrs, dessen Außenseite zumindest teilweise von einem ersten Element der Klettverbindung ummantelt ist, auf der Trägerfolie unter Bildung der Klettverbindung, wodurch das Flächentemperierungssystem gebildet wird.

Wie er hierin verwendet wird, bedeutet der Begriff "Kunststoffrohr" ein Vollkunststoffrohr oder ein Metall-Kunststoff-Verbundrohr. In Bezug auf das erfindungsgemäßen Kunststoffrohr wird der Begriff "flexibel" hierin so verwendet, dass das erfindungsgemäße flexible Kunststoffrohr Biegeradien ermöglicht, die zur Verlegung eines Rohres für ein Flächentemperierungssystem erforderlich sind.

Hinsichtlich des erfindungsgemäßen Flächentemperierungssystems ist es bevorzugt, wenn die Polymerschaumstoff-Dämmschicht als eine Schicht aus Polyurethanschaumstoff (PU-Schaum) oder expandiertem Polystyrol (EPS) ausgebildet ist. Diese Materialien haben sich sowohl hinsichtlich ihrer isolierenden Eigenschaften als auch hinsichtlich ihrer Tragfähikeit als besonders geeignet erwiesen.

Darüber hinaus kann es von Nutzen sein, wenn der formstabile, flächige Träger im Wesentlichen rechteckig ausgebildet ist, wobei zwei der stirnseitigen Ränder des Trägers mit einem Nutelement und die zwei anderen stirnseitigen Ränder des Trägers mit einem mit dem Nutelement unter Ausbildung einer Nut-und-Feder-Verbindung zwischen zwei benachbarten formstabilen, flächigen Trägern kooperierenden Federelementen versehen sind. Auf diese Weise kann die Installation des erfindungsgemäßen Flächentemperierungssystems weiter vereinfacht werden. Zusätzlich gewährleistet dies eine stabile Verbindung benachbarter formstabiler, flächiger Träger.

Ebenso kann es hilfreich sein, wenn die Abdeckfolie neben der Metallschicht eine Trägerschicht, vorzugsweise aus Papier, und eine Schutzschicht, vorzugsweise aus Polymermaterial, insbesondere Polyethylen, umfasst.

Zur Erhöhung die isolierenden Wirkung des formstabilen, flächigen Trägers ist es weiter bevorzugt, dass die Trägerfolie als Verbundfolie ausgebildet ist, deren dem formstabilen, flächigen Trägern zugewandte Seite als Metallschicht, vorzugsweise als Aluminiumschicht ausgebildet ist. Dabei ist es besonders bevorzugt, dass die Trägerfolie neben der Metallschicht eine Trägerschicht, vorzugsweise aus Papier, und eine Schutzschicht, vorzugsweise aus Polymermaterial, insbesondere Polyethylen, umfasst.

Hinsichtlich des flexiblen Kunststoffrohrs des erfindungsgemäßen Flächentemperierungssystems ist es bevorzugt, dass das flexible Kunststoffrohr zwischen einer ersten Schicht aus polymerem Material, die ein Lumen des Kunststoffrohres umgibt, und dem ersten Element der Klettverbindung eine flexible, elastische Ummantelung umfasst. Beim Verlegen des flexiblen Kunststoffrohrs auf dem mit der Trägerfolie versehenen formstabilen flächigen Träger passt sich die flexible, elastische Ummantelung aufgrund ihrer Elastitzität an die Oberfläche der Trägerfolie an, wenn auf das flexible Kunststoffrohr von außen Druck ausgeübt wird, beispielsweise indem der Verleger mit dem Fuß auf das erfindungsgemäße flexible Kunststoffrohr steigt oder mit der darauf drückt oder darüber streicht. Dadurch wird die Kontaktfläche zwischen dem flexiblen Kunststoffrohr und der Trägerfolie vergrößert, was zu einer stärker ausgebildeten Klettverbindung führt. Nach Wegfall des Drucks auf das flexible Kunststoffrohr bleibt diese Kontaktfläche aufgrund der Klettverbindung im Wesentlichen unverändert. Darüber hinaus kann das flexible Kunststoffrohr beliebig auf dem mit der Trägerfolie versehenen formstabilen flächigen Träger ohne festgelegte Verlegerichtung verlegt werden. Zur Korrektur der Verlegung kann die Klettverbindung gelöst und das Rohr in der gewünschten Anordnung verlegt werden. Dies erlaubt so eine flexible Rohrverlegung, die sich an unterschiedliche Raumgeometrien anpassen lässt. Ein Aufschwimmen des erfindungsgemäßen flexiblen Kunststoffrohrs im frisch verlegten Estrich ist weitestgehend ausgeschlossen.

Darüber hinaus kann es sich als günstig erweisen, wenn das erste Element der Klettverbindung spiralförmig oder doppelspiralförmig an der Außenseite des flexiblen Kunststoffrohrs angeordnet ist. Bei geringem Materialaufwand sorgt dies für eine dennoch hohe Häufigkeit der Kontaktstellen zwischen dem flexiblen Kunststoffrohr und dem Trägerfolie. Dabei hat es sich als materialeinsparend und damit kostengünstig erwiesen, wenn die flexible, elastische Ummantelung die erste Schicht aus polymerem Material teilweise ummantelt. Eine besonders effektive Variante hinsichtlich Materialaufwand für die flexible elastische Schicht und hoher Kontaktfläche zwischen dem flexiblen Kunststoffrohr und der Trägerfolie liegt in diesem Zusammenhang insbesondere dann vor, wenn die flexible, elastische Ummantelung an der der ersten Schicht zugewandten Seite des ersten Elements der Klettverbindung angeordnet ist und dem Verlauf des ersten Elements der Klettverbindung an der Außenseite des flexiblen Kunststoffrohrs folgt.

Die flexible, elastische Ummantelung kann die erste Schicht des flexiblen Kunststoffrohrs auch vollständig ummantelt. Dazu kann die flexible, elastische Ummantelung im Rahmen einer Coextrusion unmittelbar oder unter Einsatz einer Haftvermittlerschicht auf die erste Schicht aufgebracht werden.

Eine bevorzugte einfache Verbindung zwischen der flexiblen, elastischen Ummantelung sowie der ersten Schicht und/oder dem ersten Element der Klettverbindung erfolgt über eine Klebstoffschicht.

Die flexible, elastische Ummantelung kann aus einem flexiblen Material, wie einem geschäumten Kunststoff (z.B. ein geschäumtes Polyethylen oder Polyurethan) hergestellt sein. Die flexible, elastische Ummantelung gibt dann bei Einwirkung eines äußeren Drucks aufgrund ihrer Flexibilität nach und ermöglicht auf diese Weise beim Aufdrücken des Kunststoffrohres auf die Trägerfolie die Ausbildung einer vergrößerten Auflagefläche und somit einer stärkeren Klettverbindung zwischen erfindungsgemäßem Kunststoffrohr und Trägerfolie.

Bevorzugt handelt es sich bei dem polymeren Material der ersten Schicht des flexiblen Kunststoffrohrs um vernetztes Polyethylen (PE-X) oder PE-RT. Wie er hierin verwendet wird, bedeutet der Begriff "PE-RT" ein Polyethylen mit erhöhter Temperaturbeständigkeit gemäß ISO 24033. Eine erste Schicht aus PE-X ist aufgrund der thermischen und mechanischen Eigenschaften (wie Schlagzähigkeit, Knickfestigkeit, Punktlastbeständigkeit) bevorzugt. Wie hierin verwendet wird, bedeutet der Begriff "PE-X" vernetztes Polyethylen, wobei Peroxid-vernetztes Polyethylen (PE-Xa), Silan-vernetztes Polyethylen (PE-Xb), Elektronenstrahl-vernetztes Polyethylen (PE-Xc) sowie azovernetztes Polyethylen (PE-Xd) umfasst sind. Gemäß der vorliegenden Erfindung wird Peroxid-vernetztes Polyethylen (PE-Xa) als bevorzugtes polymeres Material der ersten Schicht eingesetzt. Die Vernetzung zum vernetzten Polyethylen erfolgt vorzugsweise wie in der DE 102 51 152 B4 beschrieben. Darüber hinaus kann das polymere Material der ersten Schicht weiter einen Haftvermittler (vorzugsweise ein funktionalisiertes Polyolefinen, insbesondere ein Maleinsäureanhydridgepfropftes LLDPE (lineares Polyethylen geringerer Dichte)) und/oder eine Diffusionssperrschicht, insbesondere aus Polyvinylakohol (PVA) oder Ethylen-Vinylalkohol-Copolymer (EVOH) umfassen.

Hinsichtlich des erfindungsgemäßen Flächentemperierungssystems ist es bevorzugt, wenn die Abdeckfolie wasserabweisend ausgeführt ist. Dadurch kann effektiv verhindert werden, dass Leckagewasser oder Feuchtigkeit in den Boden des Raums gelangt.

Die Trägerfolie ist bevorzugt flächig mit dem zweiten Element der Klettverbindung versehen, vorzugsweise ist die gesamte Fläche der Trägerfolie mit dem zweiten Element der Klettverbindung versehen. Die so gebildete flächige Klettverbindung ermöglicht eine Rohrverlegung auf der gesamten Fläche der Trägerfolie in einem nahezu beliebigen Verlegemuster.

Gemäß einer Ausführungsform der vorliegenden Erfindung wird ein Element der Klettverbindung durch Haken, Schlingen und/oder Fasern gebildet, die in ein Gewirke, ein Vlies, ein Veloursgewebe oder dergleichen des anderen Elements der Klettverbindung lösbar eingreifen können. Die Klettverbindung gewährleistet so eine lösbare Verbindung zwischen der Trägerfolie und dem e flexiblen Kunststoffrohr, wodurch das flexible Kunststoffrohr auf der Trägerfolie reversibel festgelegt wird. Dabei ist es bevorzugt, wenn das erste Element der Klettverbindung die Haken, Schlingen und/oder Fasern aufweist, während das zweite Element der Klettverbindung durch das Gewirke, das Vlies, das Veloursgewebe oder ein Plüsch-, Frottee- oder sonstiges textiles Flächengebilde gebildet wird. Umgekehrt ist auch möglich, dass das erste Element der Klettverbindung durch das Gewirke, das Vlies, das Veloursgewebe, das Plüsch-, Frottee- oder sonstiges textiles Flächengebilde gebildet wird, während das zweite Element der Klettverbindung die Haken, Schlingen und/oder Fasern aufweist.

Gemäß der vorliegenden Erfindung ist der formstabile flächige Träger vorzugsweise so stabil ausgeführt, dass er für die Verlegung des flexiblen Kunststoffrohrs als Bestandteil einer Fußbodenheizung geeignet ist.

Im Folgenden soll die vorliegende Erfindung unter Bezugnahme auf die in den Figuren dargestellten Ausführungsformen im Detail erläutert werden. Insoweit sich Teile oder Bauelemente in ihrer Funktion entsprechen, wird deren Beschreibung nicht in jeder der folgenden Figuren wiederholt. Es zeigen:
Fig. 1 eine Querschnittsdarstellung eines Flächentemperierungssystems gemäß einer Ausführungsform der vorliegenden Erfindung; und
Fig. 2 eine Querschnittsdarstellung eines Flächentemperierungssystems gemäß einer weiteren Ausführungsform der vorliegenden Erfindung.

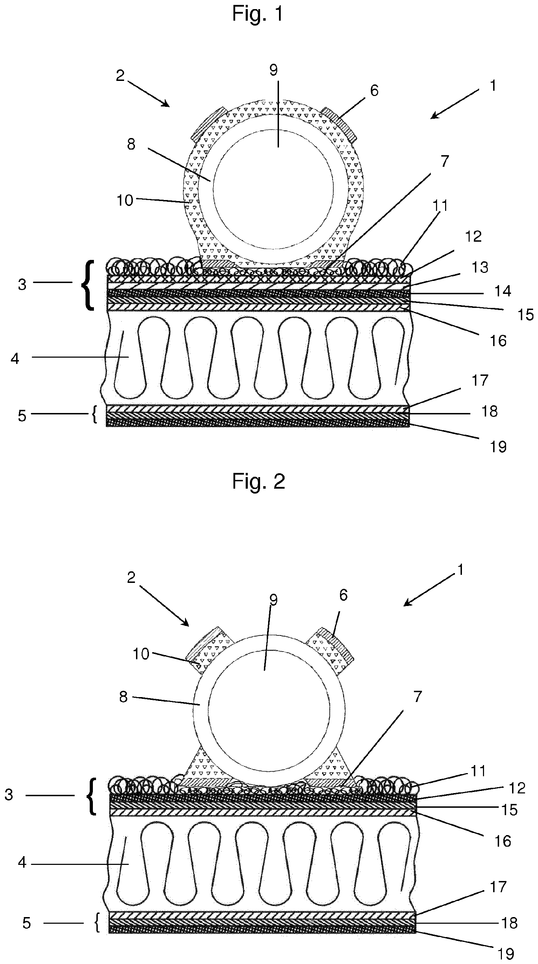

In Fig. 1 ist eine Ausführungsform eines Flächentemperierungssystems 1 gemäß der vorliegenden Erfindung in einer Querschnittsdarstellung gezeigt. Das erfindungsgemäße Flächentemperierungssystem 1 umfasst ein flexibles Kunststoffrohr 2, eine Trägerfolie 3, einen formstabilen, flächigen Träger 4 sowie eine Abdeckfolie 5.

Die Außenseite des flexiblen Kunststoffrohrs 2 ist in Form von Spiralen von einem ersten Element 6 einer Klettverbindung 7 gebildet. Das flexible Kunststoffrohr 2 umfasst eine erste Schicht 8 aus polymerem Material, die ein Lumen 9 zur Führung eines Wärmeträgermediums umgibt. In der in Fig.1 dargestellten Ausführungsform ist die erste Schicht 8 aus Peroxid-vernetztem Polyethylen (PE-Xa), um das herum in der angegeben Reihenfolge eine Haftvermittlerschicht und eine Diffusionssperrschicht angeordnet sind. Bevorzugt ist die erste Schicht 8 sauerstoffdicht gemäß DIN 4726. Die erste Schicht 8 wird vorzugsweise durch Coextrusion hergestellt. Die Außenseite des flexiblen Kunststoffrohres 2 bildet das erste Element 6 der Klettverbindung 7, das als Bänder ausgebildet ist, die in Form von im Wesentlichen parallel zueinander verlaufenden Spiralen um die erste Schicht 8 angeordnet sind. Damit ist die erste Schicht 8 von dem ersten Element 6 der Klettverbindung 7 teilweise ummantelt. Das erste Element 6 der Klettverbindung 7 umfasst Haken, Fasern oder ähnliches. Um die erste Schicht 8 des flexiblen Kunststoffrohres 2 herum ist über die gesamte Fläche mittels einer Haftvermittlerschicht und/oder einer Klebstoffverbindung eine weitere Schicht aus geschäumtem Polyethylen befestigt, die eine flexible elastische Ummantelung 10 darstellt. Die flexible elastische Ummantelung 10 ist wiederum über eine Klebstoffverbindung mit dem ersten Element 6 der Klettverbindung 7 verbunden.

Das flexible Kunststoffrohr 2 ist darin auf die Trägerfolie 3 aufgebracht, die flächig auf den formstabilen flächigen Träger 4 aufgebracht ist. An ihrer dem flexiblen Kunststoffrohr 2 zugewandten Seite umfasst die Trägerfolie 3, ein zweites Element 11 der Klettverbindung 7, das als Gewirke ausgebildet ist, alternativ auch als Vlies, Veloursgewebe, Plüsch-, Frottee- oder sonstiges textiles Flächengebilde ausgebildet sein kann. Das flexible Kunststoffrohr 2, an dessen Außenseite sich das erste Element 6 der Klettverbindung 7 befindet, ist auf das zweite Element 11 lösbar unter Bildung der Klettverbindung 7 an der Trägerfolie 3 festgelegt.

Bei seiner Verlegung wird das flexible Kunststoffrohr 2 auf die Trägerfolie 3 aufgelegt, so dass das flexible Kunststoffrohr 2 zunächst nur im Scheitelbereich punktuell auf der Trägerfolie 3 aufliegt. Wird nun auf das flexible Kunststoffrohr 3 von oben ein Druck ausgeübt, gibt die flexible elastische Ummantelung 10 nach und passt sich der Oberfläche der Trägerfolie 3 an. Damit liegt das erste Element 6 der Klettverbindung 7 nun flächig auf dem zweiten Element 11 auf der Trägerfolie 3 auf, so dass aufgrund der vergrößerten Auflagefläche eine stärkere Klettverbindung 7 ausgebildet wird, die nach Wegfall des ausgeübten Drucks im Wesentlichen bestehen bleibt.

An der dem flexiblen Kunststoffrohr 2 abgewandten Seite des zweiten Elements 11 umfasst die Trägerfolie 3 einen vorzugsweise als Polyethylenfolie ausgebildeten Träger 12, der über eine Klebstoffschicht 13 mit einer vorzugsweise ebenfalls als Polyethylenfolie ausgebildeten Schutzschicht 14 verbunden ist. An der Unterseite der Schutzschicht 14 befindet sich ein Papierträger 15, auf den eine Aluminiumfolie 16 folgt.

An der dem flexiblen Kunststoffrohr 2 abgewandten Seite der Trägerfolie 3 ist der formstabilen, flächigen Träger 4 angeordnet, der Polymerschaumstoff-Dämmschicht 4 aus expandiertem Polystyrol (EPS) mit einer Dicke von 5 cm ausgebildet ist, wobei erfindungsgemäß Dicken von 1 cm bis 20 cm möglich sind, um eine ausreichende Dämmwirkung zu erzielen.

Auf die der Trägerfolie 3 abgewandten Seite des formstabilen, flächigen Trägers 4 ist die Abdeckfolie 5 aufgebracht, die aus einer vorzugsweise als einer Aluminiumfolie ausgebildeten Metallschicht 17, einem Papierträger 18 und einer vorzugsweise als Polyethylenfolie ausgebildeten Schutzschicht 19, durch den die Abdeckfolie 5 wasserabweisend ausgeführt ist. Dadurch kann effektiv verhindert werden, dass Leckagewasser oder Feuchtigkeit in den Boden des Raums gelangt.

Um den mit der Abdeckfolie 5 und der Trägerfolie 3 versehenen formstabilen, flächigen Träger 4 herzustellen, werden die Trägerfolie 5 und eine identische weitere Folie mit den Metallschichten 16, 17 einander zugerichtet einer Aufschäumvorrichtung zugeführt. In der Aufschäumvorrichtung wird Polystyrol zu der Polymerschaumstoff-Dämmschicht 4 aus expandiertem Polystyrol (EPS) mit einer Dicke von 5 cm aufgeschäumt, wobei erfindungsgemäß Dicken von 1 cm bis 20 cm eingestellt werden. Die Metallschichten 16, 17 haften an dem als Polymerschaumstoff-Dämmschicht 4 ausgebildeten formstabilen, flächigen Träger 4 an. Dieses Produkt ist kommerziell erhältlich. Nun wird eine Klebstoffschicht 13 rückseitig auf die vorzugsweise als Polyethylenfolie ausgebildete Schutzschicht 14 aufgebracht, auf die wiederum das mit einem vorzugsweise als Polyethylenfolie ausgebildeten Träger 12 versehene erste Elements 11 der Klettverbindung 7 mit dem Träger 12 zu Klebstoffschicht 13 aufgebracht ist, woraus nach dem Aushärten der formstabile, flächige Träger 4 resultiert.

Zum Verlegen eines als Fußbodenheizung ausgebildeten erfindungsgemäßen Flächentemperierungselements 1 wird der mit der Trägerfolie 3 und der Abdeckfolie 5 versehene formstabile, flächige Träger 4 zunächst auf dem Boden vollflächig ggf. nach vorherigem Zuschneiden ausgelegt. Daraufhin wird das flexible Kunststoffrohr 2 im gewünschten Muster auf der Trägerfolie 3 verlegt und angedrückt, so dass eine Klettverbindung 7 mit vergrößerter Auflagefläche ausgebildet wird. Zur Korrektur des Verlegemusters kann die reversibel ausgebildete Klettverbindung 7 durch Anheben des flexiblen Kunststoffrohrs 2 gelöst werden, wonach dieses erneut verlegt werden kann. Abschließend wird die Anordnung mit Estrich vergossen.

In Fig. 2 ist eine weitere Ausführungsform eines Flächentemperierungssystems 1 gemäß der vorliegenden Erfindung in einer Querschnittsdarstellung gezeigt, wobei das erfindungsgemäße Flächentemperierungssystem 1 wiederum ein flexibles Kunststoffrohr 2, eine Trägerfolie 3, einen formstabilen, flächigen Träger 4 sowie eine Abdeckfolie 5 umfasst.

Die Außenseite des flexiblen Kunststoffrohrs 2 ist wiederum in Form von Spiralen von einem ersten Element 6 einer Klettverbindung 7 gebildet. Das flexible Kunststoffrohr 2 umfasst eine erste Schicht 8 aus polymerem Material, die ein Lumen 9 zur Führung eines Wärmeträgermediums umgibt. In der in Fig.2 dargestellten Ausführungsform ist die erste Schicht 8 aus einem Polyethylen mit erhöhter Temperaturbeständigkeit gemäß ISO 24033 (PE-RT), um das herum in der angegeben Reihenfolge eine Haftvermittlerschicht und eine Diffusionssperrschicht angeordnet sind. Bevorzugt ist die erste Schicht 8 sauerstoffdicht gemäß DIN 4726. Die erste Schicht 8 wird vorzugsweise durch Coextrusion hergestellt. Die Außenseite des flexiblen Kunststoffrohres 2 bildet das erste Element 6 der Klettverbindung 7, das als Bänder ausgebildet ist, die in Form von im Wesentlichen parallel zueinander verlaufenden Spiralen um die erste Schicht 8 angeordnet sind. Damit ist die erste Schicht 8 von dem ersten Element 6 der Klettverbindung 7 teilweise ummantelt. Das erste Element 6 der Klettverbindung 7 umfasst Haken, Fasern oder ähnliches.

An der dem ersten Element 6 der Klettverbindung 7 abgewandten Seite der zweiten Schicht 4 ist über die gesamte Fläche mittels einer Klebstoffverbindung eine Schicht aus geschäumtem Polyethylen angeordnet, die eine flexible elastische Ummantelung 10 darstellt. Die flexible elastische Ummantelung 10 ummantelt die erste Schicht 2 somit ebenfalls in der Form von im Wesentlichen parallel zueinander verlaufender Spiralen, deren Verlauf jeweils dem Verlauf der Spiralen des ersten Elements 6 der Klettverbindung 7 entspricht. Die flexible elastische Ummantelung 10 ist wiederum über eine Klebstoffverbindung mit der ersten Schicht 8 des Kunststoffrohres 2 verbunden.

Das flexible Kunststoffrohr 2 ist auch in der in Fig. 2 gezeigten Ausführungsform auf die Trägerfolie 3 aufgebracht, die flächig auf den formstabilen flächigen Träger 4 aufgebracht ist. An ihrer dem flexiblen Kunststoffrohr 2 zugewandten Seite umfasst die Trägerfolie 3 ein zweites Element 11 der Klettverbindung 7, das wiederum als Gewirke ausgebildet ist, alternativ auch als Vlies, Velours-, Plüsch-, Frottee- oder sonstiges textiles Flächengebilde ausgebildet sein kann. Das flexible Kunststoffrohr 2, an dessen Außenseite sich das erste Element 6 der Klettverbindung 7 befindet, ist auf das zweite Element 11 lösbar unter Bildung der Klettverbindung 7 an der Trägerfolie 3 festgelegt.

Bei seiner Verlegung wird das flexible Kunststoffrohr 2 auf die Trägerfolie 3 aufgelegt, so dass das flexible Kunststoffrohr 2 zunächst nur im Scheitelbereich punktuell auf der Trägerfolie 3 aufliegt. Wird nun auf das flexible Kunststoffrohr 3 von oben ein Druck ausgeübt, gibt die flexible elastische Ummantelung 10 nach und passt sich der Oberfläche der Trägerfolie 3 an. Damit liegt das erste Element 6 der Klettverbindung 7 nun flächig auf dem zweiten Element 11 auf der Trägerfolie 3 auf, so dass aufgrund der vergrößerten Auflagefläche eine stärkere Klettverbindung 7 ausgebildet wird, die nach Wegfall des ausgeübten Drucks im Wesentlichen bestehen bleibt.

An der dem flexiblen Kunststoffrohr 2 abgewandten Seite des ersten Elements 11 umfasst die Trägerfolie 3 einen vorzugsweise als Polyethylenfolie ausgebildeten Träger 12, an dessen Unterseite der Schutzschicht 14 sich ein Papierträger 15 befindet, auf den eine Aluminiumfolie 16 folgt.

An der dem flexiblen Kunststoffrohr 2 abgewandten Seite der Trägerfolie 3 ist der formstabilen, flächigen Träger 4 angeordnet, der Polymerschaumstoff-Dämmschicht 4 aus Polyurethan (PU) mit einer Dicke von 7 cm ausgebildet ist, wobei erfindungsgemäß Dicken von 1 cm bis 20 cm möglich sind, um eine ausreichende Dämmwirkung zu erzielen.

Auf die der Trägerfolie 3 abgewandten Seite des formstabilen, flächigen Trägers 4 ist die Abdeckfolie 5 aufgebracht, die aus einer vorzugsweise als einer Aluminiumfolie ausgebildeten Metallschicht 17, einem Papierträger 18 und einer vorzugsweise als Polyethylenfolie ausgebildeten Schutzschicht 19, durch den die Abdeckfolie 5 wasserabweisend ausgeführt ist. Dadurch kann effektiv verhindert werden, dass Leckagewasser oder Feuchtigkeit in den Boden des Raums gelangt.

Um den mit der Abdeckfolie 5 und der Trägerfolie 3 versehenen formstabilen, flächigen Träger 4 herzustellen, werden die Abdeckfolie 5 und die Trägerfolie 3, die das zweite Element 11 der Klettverbindung 7 bereits umfasst, mit den Metallschichten 16, 17 einander zugerichtet einer Aufschäumvorrichtung zugeführt. In der Aufschäumvorrichtung werden die monomeren Komponenten eines Polyurethans zu der Polymerschaumstoff-Dämmschicht 4 aus Polyurethan (PU) mit einer Dicke von 7 cm aufgeschäumt, wobei erfindungsgemäß Dicken von 1 cm bis 20 cm eingestellt werden. Die Metallschichten 16, 17 haften an dem als Polymerschaumstoff-Dämmschicht 4 ausgebildeten formstabilen, flächigen Träger 4 an. Durch Zuführung der fertigen die Trägerfolie 3, die das zweite Element 11 der Klettverbindung 7 bereits umfasst, zur Aufschäumvorrichtung können gegenüber der in Bezug auf Fig. 1 beschriebenen Vorgehensweise die Klebstoffschicht 13 und die vorzugsweise als Polyethylenfolie ausgebildete Schutzschicht 14 weggelassen werden, wodurch der Aufbau des erfindungsgemäßen Flächentemperierungssystems vereinfacht und damit die Kosten merklich gesenkt werden können.

Das Verlegen eines als Fußbodenheizung ausgebildeten erfindungsgemäßen Flächentemperierungselements 1 erfolgt in der in Bezug auf die Fig. 1 erläuterten Art und Weise.

Die vorliegende Erfindung wurde unter Bezugnahme auf die in den Figuren gezeigte Ausführungsform der vorliegenden Erfindung im Detail beschrieben. Es versteht sich, dass die vorliegende Erfindung nicht auf die gezeigte Ausführungsform beschränkt ist, sondern sich der Umfang der vorliegenden Erfindung aus den beiliegenden Ansprüchen ergibt.

## Patentansprüche

1. Flächentemperierungssystem (1), umfassend:
- mindestens ein flexibles Kunststoffrohr (2), dessen Außenseite zumindest teilweise von einem ersten Element (6) einer Klettverbindung (7) ummantelt ist;
- eine Trägerfolie (3), wobei an einer Seite der Trägerfolie (3) ein zweites Element (11) der Klettverbindung (7) angeordnet ist, so dass das/die flexible(n) Kunststoffrohr(e) (2) lösbar unter Bildung der Klettverbindung (7) an der Trägerfolie (3) festlegbar sind; und
- einen formstabilen, flächigen Träger (4), auf dessen einer Seite die Trägerfolie (3) angeordnet ist;
wobei der formstabilen, flächigen Träger (4) als Polymerschaumstoff-Dämmschicht (4) ausgebildet ist, dessen der Trägerfolie (3) abgewandte Seite mit einer Abdeckfolie (5) verbunden ist,
**dadurch gekennzeichnet,**
**dass** die Polymerschaufstoff-Dämmschicht 1 cm bis 20 cm dick ist, und
die Abdeckfolie (5) als Verbundfolie ausgebildet ist, deren dem formstabilen, flächigen Träger (4) zugewandte Seite als Metallschicht (17), vorzugsweise als Aluminiumschicht (17), ausgebildet ist.

2. Flächentemperierungssystem (1) nach Anspruch 1, **dadurch gekennzeichnet, dass** die Polymerschaumstoff-Dämmschicht (4) als eine Schicht aus Polyurethanschaumstoff oder expandiertem Polystyrol (EPS) ausgebildet ist.

3. Flächentemperierungssystem (1) nach Anspruch 1 oder Anspruch 2, **dadurch gekennzeichnet, dass** der formstabile, flächige Träger (4) im Wesentlichen rechteckig ausgebildet ist, wobei zwei der stirnseitigen Ränder des Trägers (4) mit einem Nutelement und die zwei anderen stirnseitigen Ränder des Trägers (4) mit einem mit dem Nutelement unter Ausbildung einer Nut-und-Feder-Verbindung zwischen zwei benachbarten formstabilen, flächigen Trägern (4) kooperierenden Federelementen versehen sind.

4. Flächentemperierungssystem (1) nach Anspruch 1, **dadurch gekennzeichnet, dass** die Abdeckfolie (5) neben der Metallschicht (17) eine Trägerschicht (18), vorzugsweise aus Papier, und eine Schutzschicht (19), vorzugsweise aus Polymermaterial, insbesondere Polyethylen, umfasst.

5. Flächentemperierungssystem (1) nach einem der vorhergehenden Ansprüche, **dadurch gekennzeichnet, dass** die Trägerfolie (3) als Verbundfolie ausgebildet ist, deren dem formstabilen, flächigen Träger (4) zugewandte Seite als Metallschicht (16), vorzugsweise als Aluminiumschicht (16) ausgebildet ist.

6. Flächentemperierungssystem (1) nach Anspruch 5, **dadurch gekennzeichnet, dass** die Trägerfolie (9) neben der Metallschicht (16) eine Trägerschicht (15), vorzugsweise aus Papier, und eine Schutzschicht (14), vorzugsweise aus Polymermaterial, insbesondere Polyethylen, umfasst.

7. Flächentemperierungssystem (1) nach einem der vorhergehenden Ansprüche, **dadurch gekennzeichnet, dass** das flexible Kunststoffrohr (2) eine erste Schicht (8) aus polymerem Material und eine flexible, elastische Ummantelung (10) umfasst, wobei die Ummantelung (10) zwischen der ersten Schicht (8) aus polymerem Material, die ein Lumen (9) des Kunststoffrohres (2) umgibt, und dem ersten Element (6) der Klettverbindung angeordnet ist.

8. Verfahren zur Herstellung eines Flächentemperierungssystems (1) nach einem der vorhergehenden Ansprüche, dadurch gegenzeichnet, dass das Verfahren die folgenden Stufen umfasst:
- Bereitstellen einer Abdeckfolie (5);
- Bereitstellen einer Trägerfolie (3), wobei an einer Seite der Trägerfolie (3) ein zweites Element (11) einer Klettverbindung (7) angeordnet ist;
- Zuführen der Abdeckfolie (5) und der Trägerfolie (3) zu einer Aufschäumvorrichtung;
- Aufschäumen eines Polymermaterials in eine Dicke von 1 cm bis 20 cm zur Polymerschaumstoff-Dämmschicht (4) zwischen der Trägerfolie (3) und der Abdeckfolie (5) in der Aufschäumvorrichtung, wodurch ein einseitig mit der Trägerfolie (3) versehener, formstabiler, flächiger Träger (4) gebildet wird, und wobei die Abdeckfolie als Verbundfolie ausgebildet ist, deren dem formstabilen, flächigen Träger zugewandte Seite als Metallschicht, vorzugsweise als Aluminiumschicht, ausgebildet ist; und
- Verlegen eines flexiblen Kunststoffrohrs (2), dessen Außenseite zumindest teilweise von einem ersten Element (6) der Klettverbindung (7) ummantelt ist, auf der Trägerfolie (3) unter Bildung der Klettverbindung (7), wodurch das Flächentemperierungssystem (1) gebildet wird.

## Claims

1. Surface temperature control system (1), comprising:
- at least one flexible plastic tube (2), the outside of which is encased at least partially by a first element (6) of a hook-and-loop fastening (7);
- a carrier film (3), wherein a second element (11) of the hook-and-loop fastening (7) is arranged on one side of the carrier film (3), so that the flexible plastic tube(s) (2) can be fixed detachably on the carrier film (3) with formation of the hook-and-loop fastening (7); and
- a dimensionally stable, planar-like carrier (4), on one side of which the carrier film (3) is arranged;
wherein the dimensionally stable, planar-like carrier (4) is designed as a polymer foam insulation layer (4), the side of which remote from the carrier film (3) is connected to a cover film (5),
**characterised in that** the polymer foam insulation layer is 1 cm to 20 cm thick, and the cover film (5) is designed as a composite film, the side of which facing the dimensionally stable, planar-like carrier (4) is designed as a metal layer (17), preferably as an aluminium layer (17).

2. Surface temperature control system (1) according to claim 1, **characterised in that** the polymer foam insulation layer (4) is designed as a layer of polyurethane foam or expanded polystyrene (EPS).

3. Surface temperature control system (1) according to claim 1 or claim 2, **characterised in that** the dimensionally stable, planar-like carrier (4) is designed substantially rectangular, wherein two of the side edges of the carrier (4) are provided with a groove element and the two other side edges of the carrier (4) are provided with a tongue element cooperating with the groove element with the formation of a tongue-and-groove connection between two adjacent dimensionally stable, planar-like carriers (4).

4. Surface temperature control system (1) according to claim 1, **characterised in that** the cover film (5) comprises, as well as the metal layer (17), a carrier layer (18), preferably of paper, and a protective layer (19), preferably of polymer material, in particular polyethylene.

5. Surface temperature control system (1) according to any one of the preceding claims, **characterised in that** the carrier film (3) is designed as a composite film, the side of which facing the dimensionally stable, planar-like carrier (4) is designed as a metal layer (16), preferably as an aluminium layer (16).

6. Surface temperature control system (1) according to claim 5, **characterised in that** the carrier film (9) comprises, as well as the metal layer (16), a carrier layer (15), preferably of paper, and a protective layer (14), preferably of polymer material, in particular polyethylene.

7. Surface temperature control system (1) according to any one of the preceding claims, **characterised in that** the flexible plastic tube (2) comprises a first layer (8) of polymer material and a flexible, elastic sheathing (10), wherein the sheathing (10) is arranged between the first layer (8) of polymer material, which encloses a lumen (9) of the plastic tube (2), and the first element (6) of the hook-and-loop fastening.

8. Method for the manufacture of a surface temperature control system (1) according to any one of the preceding claims, **characterised in that** the method comprises the following stages:
- provision of a cover film (5);
- provision of a carrier film (3), wherein a second element (11) of a hook-and-loop fastening (7) is arranged on one side of the carrier film (3);
- supply of the cover film (5) and the carrier film (3) to a foaming device;
- foaming of a polymer material in a thickness of 1 cm to 20 cm to the polymer foam insulation layer (4) between the carrier film (3) and the cover film (5) in the foaming device, whereby a dimensionally stable, planar-like carrier (4) provided unilaterally with the carrier film (3) is formed, and wherein the cover film is designed as a composite film, the side of which facing the dimensionally stable, planar-like carrier is designed as a metal layer, preferably as an aluminium layer; and
- laying of a flexible plastic tube (2), the outside of which is encased at least partially by a first element (6) of the hook-and-loop fastening (7), on the carrier film (3) with formation of the hook-and-loop fastening (7), whereby the surface temperature control system (1) is formed.

## Revendications

1. Système de régulation de température de surfaces (1), comprenant :
- au moins un tuyau en plastique (2) flexible, dont le côté extérieur est enveloppé au moins en partie d'un premier élément (6) d'une liaison agrippante (7) ;
- un film de support (3), dans lequel un deuxième élément (11) de la liaison agrippante (7) est disposé au niveau d'un côté du film de support (3) de telle sorte que le/les tuyau/tuyaux en plastique (2) flexible(s) peuvent être fixés au niveau du film de support (3) de manière amovible en formant la liaison agrippante (7) ; et
- un support (4) plat à forme stable, sur un côté duquel le film de support (3) est disposé ;
dans lequel le support (4) plat à forme stable est réalisé en tant que couche isolante en mousse polymère (4), dont le côté opposé au film de support (3) est relié à un film de recouvrement (5),
**caractérisé en ce**
**que** la couche isolante en mousse polymère présente une épaisseur de 1 cm à 20 cm, et
le film de recouvrement (5) est réalisé en tant que film composite, dont le côté tourné vers le support (4) plat à forme stable est réalisé en tant que couche en métal (17), de préférence en tant que couche en aluminium (17).

2. Système de régulation de température de surfaces (1) selon la revendication 1, **caractérisé en ce que** la couche isolante en mousse polymère (4) est réalisée en tant qu'une couche composée de mousse de polyuréthane ou de polystyrène expansé (EPS).

3. Système de régulation de température de surfaces (1) selon la revendication 1 ou la revendication 2, **caractérisé en ce que** le support (4) plat à forme stable est réalisé de manière sensiblement rectangulaire, dans lequel deux des bords côté frontal du support (4) sont pourvus d'un élément de rainure et deux autres bords côté frontal du support (4) sont pourvus d'éléments de languette coopérant avec l'élément de rainure en réalisant une liaison à rainure-languette entre deux supports (4) plats à forme stable adjacents.

4. Système de régulation de température de surfaces (1) selon la revendication 1, **caractérisé en ce que** le film de recouvrement (5) comprend, outre la couche en métal (17), une couche de support (18), de préférence composée de papier, et une couche de protection (19), de préférence composée de matériau polymère, en particulier de polyéthylène.

5. Système de régulation de température de surfaces (1) selon l'une quelconque des revendications précédentes, **caractérisé en ce que** le film de support (3) est réalisé en tant que film composite, dont le côté tourné vers le support (4) plat à forme stable est réalisé en tant que couche en métal (16), de préférence en tant que couche en aluminium (16).

6. Système de régulation de température de surfaces (1) selon la revendication 5, **caractérisé en ce que** le film de support (9) comprend outre la couche en métal (16) une couche de support (15), de préférence composée de papier, et une couche de protection (14), de préférence composée de matériau polymère, en particulier de polyéthylène.

7. Système de régulation de température de surfaces (1) selon l'une quelconque des revendications précédentes, **caractérisé en ce que** le tuyau en plastique (2) flexible comprend une première couche (8) composée d'un matériau polymère et une enveloppe (10) élastique flexible, dans lequel l'enveloppe (10) est disposée entre la première couche (8) composée d'un matériau polymère, qui entoure un lumen (9) du tuyau en plastique (2), et le premier élément (6) de la liaison agrippante.

8. Procédé servant à fabriquer un système de régulation de température de surfaces (1) selon l'une quelconque des revendications précédentes, **caractérisé en ce que** le procédé comprend les étapes suivantes :
- de fourniture d'un film de recouvrement (5) ;
- de fourniture d'un film de support (3), dans lequel un deuxième élément (11) d'une liaison agrippante (7) est disposé au niveau d'un côté du film de support (3) ;
- d'amenée du film de recouvrement (5) et du film de support (3) à un dispositif de moussage ;
- de moussage d'un matériau polymère en une épaisseur de 1 cm à 20 cm en la couche isolante en mousse polymère (4) entre le film de support (3) et le film de recouvrement (5) dans le dispositif de moussage, ce qui permet de former un support (4) plat, à forme stable, pourvu d'un côté du film de support (3), et dans lequel le film de recouvrement est réalisé en tant que film composite, dont le côté tourné vers le support plat à forme stable est réalisé en tant que couche en métal, de préférence en tant que couche en aluminium ; et
- de pose d'un tuyau en plastique (2) flexible, dont le côté extérieur est enveloppé au moins en partie d'un premier élément (6) de la liaison agrippante (7), sur le film de support (3) en formant la liaison agrippante (7), ce qui permet de former le système de régulation de température de surfaces (1).
